(19) Europäisches Patentamt
European Patent Office
Office européen des brevets

(11) EP 3 010 009 A1

(12) EUROPEAN PATENT APPLICATION
published in accordance with Art. 153(4) EPC

(43) Date of publication:
20.04.2016 Bulletin 2016/16

(51) Int Cl.:
G09G 5/00 (2006.01)    G09G 3/20 (2006.01)
G09G 3/36 (2006.01)    G09G 5/02 (2006.01)
H04N 5/66 (2006.01)

(21) Application number: 14810506.7

(22) Date of filing: 29.05.2014

(86) International application number:
PCT/JP2014/064347

(87) International publication number:
WO 2014/199841 (18.12.2014 Gazette 2014/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.06.2013  JP 2013125405

(71) Applicant: EIZO Corporation
Ishikawa 924-8566 (JP)

(72) Inventors:
• SAITO, Hiroya
Hakusan-shi
Ishikawa 924-8566 (JP)

• KOMETANI, Tomohiro
Hakusan-shi
Ishikawa 924-8566 (JP)
• TANABE, Toshiaki
Hakusan-shi
Ishikawa 924-8566 (JP)

(74) Representative: Isarpatent
Patent- und Rechtsanwälte Behnisch Barth
Charles
Hassa Peckmann & Partner mbB
Friedrichstrasse 31
80801 München (DE)

(54) MULTI-MONITOR SYSTEM, AND COMPUTER PROGRAM AND DISPLAY DEVICE USED IN MULTI-MONITOR SYSTEM

(57) Provided is a multi-monitor system that includes display devices having different luminance levels with respect to the same set luminance value and that can easily match the luminance levels of the display devices. A multi-monitor system including a plurality of display devices includes a processor that, on the basis of respective luminance information values of a particular display device and the other display device of the plurality of display devices and a set luminance value of the particular display device arbitrarily set by a user, calculates set luminance value of the other display device in such a manner that luminance level of the other display device becomes substantially equal to a luminance level of the particular display device.

Fig. 1

FIG. 1  FIRST EMBODIMENT

**Description**

**Technical Field**

The present invention relates to a multi-monitor system including multiple display devices (e.g., liquid crystal display devices), and a computer program and display device used in a multi-monitor system.

**Background Art**

There are multi-monitor systems including different types of display devices, and such multi-monitor systems have a problem that luminance varies among the display devices even when the same set luminance value is set for the display devices. Even a multi-monitor system including the same type of display devices has the same problem due to the individual differences among the display devices.

For this reason, there is a demand for a multi-monitor system that can match the luminance levels of the display devices.

In Patent Literature 1, the user operates a slave device to visually match the luminance of the slave device to that of a master device and obtains a correction coefficient from the ratio between the set backlight values of the master device and slave device at the time of the matching. Subsequently, when the user changes the set backlight value of the master device, the set backlight value of the slave device is determined in accordance with the correction coefficient. Thus, once the user visually matches the luminance of the slave device to that of the master device, the user only has to change the set backlight value of the master device, so that the luminance of the slave device is automatically matched to that of the master device.

**Citation List**

**Patent Literature**

Patent Literature 1: WO2012/ 172637

**Summary of Invention**

**Technical Problem**

The technology disclosed in Patent Literature 1 assumes that the user visually matches the luminance of the slave device to that of the master device. This task is troublesome.

Further, for example, when the devices included in the multi-monitor system are located away from each other, the user has difficulty in visually matching the luminance levels. To avoid such difficulty or troublesome task, it is preferred to dispose a luminance sensor in each display device and to match the luminance levels on the basis of the outputs of the luminance sensors. However, a luminance sensor is expensive. For this reason, there is a demand for a technology that can easily match the luminance levels of the display devices without having to dispose a luminance sensor in each display device.

The present invention has been made in view of the foregoing, and an object thereof is providing a multi-monitor system that includes display devices having different luminance levels with respect to the same set luminance value and that can easily match the luminance levels of the display devices.

**Solution to Problem**

The present invention provides a multi-monitor system including a plurality of display devices. The multi-monitor system comprises a processor that, on the basis of respective luminance information values of a particular display device and the other display device of the plurality of display devices, and a set luminance value of the particular display device arbitrarily set by a user, calculates set luminance value of the other display device in such a manner that luminance level of the other display device becomes substantially equal to a luminance level of the particular display device.

To solve the above problems, the present inventors conducted investigations intensively. Then, the present inventors found that the technology of Patent Literature 1 used the set backlight values of the master device and slave device and therefore required that the user previously visually match the luminance of the slave device to that of the master device. The present inventors then found that by calculating set luminance values of the display devices included in the multi-monitor system on the basis of luminance information values of the display devices and the set luminance value of a particular display device rather than using the set backlight values, it was possible to substantially match the luminance levels of all the display devices included in the multi-monitor system without the user having to previously visually match the luminance levels, and then completed the present invention. For example, the set luminance value of a liquid crystal display device refers to a backlight control signal set value, and is more specifically a value for adjusting the brightness of a backlight and is a value (e.g., in %) indicating the drive amount of the backlight.

Various embodiments of the present invention are described below. The embodiments below can be combined with each other.

Preferably, the luminance information value of at least one of the plurality of display devices is an actually measured luminance value corresponding to a particular set luminance value.

Preferably, the luminance information value of at least one of the plurality of display devices is a representative luminance value corresponding to a particular set luminance value of a display device of the same type.

Preferably, the luminance information value of at least one of the plurality of display devices is calculated on the basis of at least RGB luminance information values and RGB gain values, the RGB luminance information values being composed of luminance information values of R, G, and B.

Preferably, the RGB luminance information values of at least one of the plurality of display devices are actually measured RGB luminance values corresponding to particular set RGB luminance values, the actually measured RGB luminance values being composed of actually measured luminance values of R, G, and B, the particular set RGB luminance values being composed of particular set luminance values of R, G, and B.

Preferably, the RGB gain values are values set so that color temperatures of the plurality of display devices are equalized, or values arbitrarily set by a user.

Preferably, the luminance information value of at least one of the plurality of display devices is determined according to a particular color temperature arbitrarily set by a user.

Preferably, the set luminance value of the particular display device is a maximum value.

Preferably, the luminance information value of at least one of the plurality of display devices is a set luminance value corresponding to a particular actually measured luminance value.

Preferably, the RGB luminance information values of at least one of the plurality of display devices are set RGB luminance values corresponding to particular actually measured RGB luminance values, the set RGB luminance values being composed of set luminance values of R, G, and B.

Preferably, the processor is disposed in one of the display devices in the multi-monitor system or disposed in a controller, the controller being disposed independently of the display devices.

Preferably, the display devices included in the multi-monitor system are configured to communicate with a cloud server.

The present invention also provides a computer program used by a multi-monitor system including a plurality of display devices. The computer program causes a computer to perform

a step of, on the basis of respective luminance information values of a particular display device and the other display device of the plurality of display devices and a set luminance value of the particular display device arbitrarily set by a user, calculating set luminance value of the other display device in such a manner that luminance level of the other display device become substantially equal to a luminance level of the particular display device.

The present invention also provides a display device used in a multi-monitor system including a plurality of display devices. The display device comprises:

a processor that, on the basis of respective luminance information values of a particular display device and the other display device of the plurality of display devices and a set luminance value of the particular display device arbitrarily set by a user, calculates set luminance value of the other display device in such a manner that luminance level of the other display device becomes substantially equal to a luminance level of the particular display device; and
a transmitting unit that transmits the set luminance value calculated by the processor to the other display device.

**Brief Description of the Drawings**

Fig. 1 is a block diagram showing the configuration of a multi-monitor system 1 of a first embodiment of the present invention.
Fig. 2 is a flowchart showing a method for matching the luminance levels in the multi-monitor system 1 of the first embodiment of the present invention.
Fig. 3 is an example of a graph showing the relationship between color temperature and maximum luminance.
Fig. 4 is a block diagram showing the configuration of a multi-monitor system 1 of a second embodiment of the present invention.

Fig. 5 is a flowchart showing a method for matching the luminance levels in the multi-monitor system 1 of the second embodiment of the present invention.

Fig. 6 is a block diagram showing the configuration of a multi-monitor system 1 of a third embodiment of the present invention.

Fig. 7 is a flowchart showing a method for matching the luminance levels in the multi-monitor system 1 of the third embodiment of the present invention.

Fig. 8 is a block diagram showing the configuration of a multi-monitor system 1 of a fourth embodiment of the present invention.

Fig. 9 is a flowchart showing a method for matching the luminance levels in the multi-monitor system 1 of the fourth embodiment of the present invention.

Fig. 10 is a block diagram showing an example configuration 1 of a multi-monitor system 1 of a fifth embodiment of the present invention.

Fig. 11 is a block diagram showing an example configuration 2 of the multi-monitor system 1 of the fifth embodiment of the present invention.

Fig. 12 is a block diagram showing an example configuration 3 of the multi-monitor system 1 of the fifth embodiment of the present invention.

Fig. 13 is a block diagram showing an example configuration 4 of the multi-monitor system 1 of the fifth embodiment of the present invention.

Fig. 14 is a block diagram showing an example configuration 5 of the multi-monitor system 1 of the fifth embodiment of the present invention.

**Description of Embodiments**

Now, various embodiments of the present invention will be described. Various features described in the embodiments below can be combined with each other. Elements or the like that are not described in second or later embodiments are similar to those described in a first embodiment.

1. First Embodiment

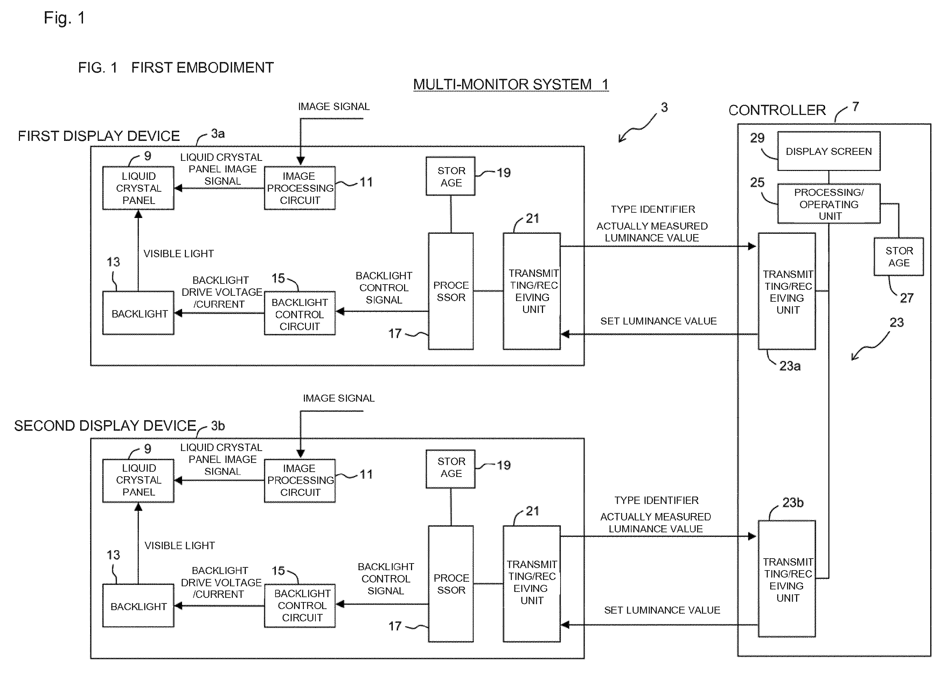

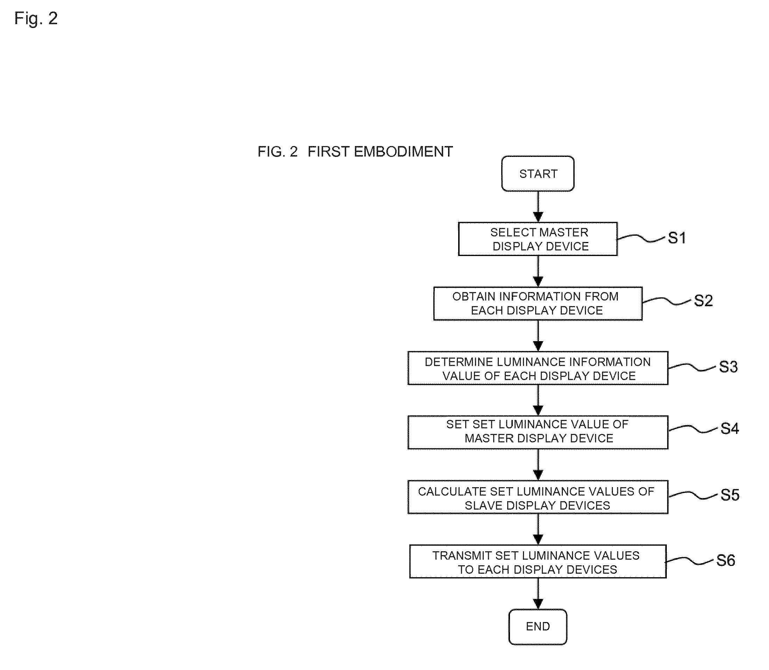

Referring now to Figs. 1 and 2, there will be described a multi-monitor system 1 of the first embodiment of the present invention.

Fig. 1 is a block diagram showing the configuration of the multi-monitor system 1 of the first embodiment of the present invention. The multi-monitor system 1 includes multiple display devices 3 including a first display device 3a and a second display device 3b, and a controller 7 that is configured to communicate with the display devices 3. While Fig. 1 shows two display devices 3, the number of display devices included in the multi-monitor system 1 is not limited to a particular number and may be three or more. The display devices 3 may be of the same type or may be of different types. The display devices 3 and controller 7 may communicate with each other wirelessly or by wire.

Each display device 3 includes a liquid crystal panel 9, an image processing circuit 11, a backlight 13, a backlight control circuit 15, a processor 17, a storage 19, and a transmitting/receiving unit 21.

The image processing circuit 11 converts an image signal received from outside into a signal most suitable for the liquid crystal panel 9 and outputs the signal as a liquid crystal panel image signal. The backlight control circuit 15 applies a backlight drive voltage to the backlight 13 and outputs a current to be passed through the backlight 13 in accordance with a backlight control signal received from the processor 17. In PWM dimming, a backlight control signal is a signal that controls the duty ratio to turn on or off the current passing through the backlight 13; in DC dimming, a backlight control signal is a signal that controls the amount of the current to be passed through the backlight 13. The backlight 13 is driven by the backlight drive current outputted from the backlight control circuit 15 and thus outputs visible light. The user can adjust the luminance of the backlight 13 by operating a set luminance value operation unit (not shown) to set a set luminance value and then causing the backlight control circuit 15 to adjust the output current in accordance with the set luminance value. The liquid crystal panel 9 displays an image on the basis of the liquid crystal panel image signal received from the image processing circuit 11 and visible light outputted by the backlight 13. The processor 17 includes a CPU and various types of memories. The operation algorithm of the processor 17 is stored in the storage 19 in the form of a program, and processes of the present embodiment are performed when the CPU reads and executes the program.

During manufacture of a display device 3, the type identifier (e.g., type code) of the display device 3 and an actually measured luminance value corresponding to a particular set luminance value of the display device 3 are stored in the storage 19. For example, a particular set luminance value is the maximum values of R, G, and B (in full-screen white display). However, the color displayed on the liquid crystal panel 9 to obtain an actually measured luminance value is not limited to white. For example, an actually measured luminance value in a state of displaying one of R, G, and B may be stored in the storage 19. In this case, all or at least one of R, G, and B may be set to smaller values (e.g., 80%) than the respective maximum values. The processor 17 reads one or both of the type identifier and actually measured luminance value from the storage 19, and transmits it or them to the controller 7 through the transmitting/receiving unit 21.

The controller 7 is, for example, a computer in which a predetermined computer program is installed. The controller 7 includes a transmitting/receiving unit 23, a processing/operating unit 25, and a storage 27. The transmitting/receiving unit 23 includes multiple transmitting/receiving units including a first transmitting/receiving unit 23a that transmits and receives signals to and from the first display device 3a, and a second transmitting/receiving unit 23b that transmits and receives signals to and from the second display device 3b. In the storage 27, representative luminance values corresponding to particular set luminance values (e.g., maximum values) of various types of the display device and the type identifiers are stored so as to be associated with each other. If no actually measured luminance value is stored in the storage 19 of a display device 3, the representative luminance value is used in place of the actually measured luminance value. Since the maximum luminance value varies even among the display devices 3 of the same type, it is preferred to use the actually measured luminance values of the display devices 3 to match the luminance levels of the display devices 3. On the other hand, a representative luminance values is used when an actually measured luminance value is not available. Thus, although the accuracy is slightly reduced, the luminance levels can be matched without taking time and effort. A representative luminance value can be obtained from the distribution of actually measured luminance values of many display devices of the same type. An average, mode, or the like can be used as a representative value. Use of a representative luminance value allows the luminance levels to be matched even when an actually measured luminance values is not available. However, the representative luminance values of display devices of the same type are the same value and therefore cannot be used to match the luminance levels of such display devices. Accordingly, it is very advantageous to use actually measured luminance values in the multi-monitor system 1 including the display devices 3 of the same type.

The processing/operating unit 25 receives a set luminance value inputted by the user and performs a predetermined calculation on the basis of this set luminance value, actually measured luminance values obtained through the transmitting/receiving unit 23, and representative luminance values stored in the storage 27 so as to obtain set luminance values to be applied to the display devices 3. The processing/operating unit 25 then transmits the set luminance values to the display devices 3 through the transmitting/receiving unit 23.

Referring now to a flowchart in Fig. 2, there will be described in detail a method for matching the luminance levels of the display devices 3 included in the multi-monitor system 1. In the present embodiment, a user operation screen is displayed on a display screen 29 of the controller 7, and the processing/operating unit 25 performs predetermined processing in accordance with information inputted to the operation screen by the user. Note that the operation screen may be displayed on any display device 3 included in the multi-monitor system 1 rather than on the display screen 29. The order of steps in the flowchart of Fig. 2 is only illustrative and may be changed as necessary. For example, step S2 may be performed prior to step S1.

First, in step S1, the processing/operating unit 25 displays, on the display screen 29, an operation screen for selecting a master display device. The user selects, as a master display device, any display device 3 included in the multi-monitor system 1 on this display screen. Here, it is assumed that the user selects the first display device 3a as a master display device. In accordance with this selection, the processing/operating unit 25 of the controller 7 sets the first display device 3a as a master display device and sets the second display device 3b as a slave display device. Similarly, the processing/operating unit 25 sets the other display devices 3 included in the multi-monitor system 1 as slave display devices. The relationship between the master display device and slave display devices is not fixed; if the user selects the second display device 3b as a master display device, the first display device 3a and the other display devices serve as slave display devices. Alternatively, step S1 may be omitted by presetting a particular display device 3 as a master display device.

Then, in step S2, the processing/operating unit 25 reads one or both of the type identifier and actually measured luminance value from the storage 19 of each display device included in the multi-monitor system 1.

Then, in step S3, the processing/operating unit 25 determines the luminance information value of each display device 3. For a display device 3 storing an actually measured luminance value in the storage 19, the processing/operating unit 25 uses this actually measured luminance value as a "luminance information value." For a display device 3 storing no actually measured luminance value in the storage 19, the processing/operating unit 25 reads a representative luminance value from the storage 27 in accordance with the type identifier of the display device and uses this representative luminance value as a "luminance information value." As seen above, in the present embodiment, the luminance information value is an actually measured luminance value or representative luminance value.

Then, in step S4, the processing/operating unit 25 displays, on the display screen 29, an operation screen for setting the set luminance value of the first display device 3a serving as a master display device. The user sets the set luminance value of the master display device on this operation screen, and the processing/operating unit 25 receives this setting. The upper limit of the set luminance value is limited by the lowest of the maximum luminance levels of the display devices 3 included in the multi-monitor system 1. For example, assuming that the maximum luminance of the first display device 3a is 300 cd/m$^2$ and the maximum luminance of the second display device 3b is 270 cd/m$^2$. In this case, if the set luminance value of the first display device 3a is set to 285 cd/m$^2$, which is 95% of 300 cd/m$^2$, the luminance of the second display device 3b cannot be set to 285 cd/m$^2$. That is, luminance matching at such a luminance level is impossible. For this reason, the upper limit of the set luminance value of the master display device is set to a value determined by Formula 1-1 below so that the luminance levels of all the display devices 3 included in the multi-monitor system 1 can be matched to the luminance level of the master display device. Note that the value determined by Formula 1-1 is the ratio of the set luminance value adjustment range of the master display device to which the luminance levels of all the display devices 3 included in the multi-monitor system 1 can be matched, to the set luminance value adjustment range of the master display device. Accordingly, for example, if the set luminance value is expressed in %, the value determined by Formula 1-1 should also be expressed in % for understanding. This also applies to Formula 1-2.

[Formula 1-1]

Upper limit of set luminance value =(maximum luminance of display device 3 having lowest maximum luminance)/(maximum luminance of master display device)

While the luminance information values determined in step S3 are preferably the maximum luminance levels, they need not necessarily be the maximum luminance levels. If the luminance information values are not the maximum luminance levels, the upper limit of the set luminance value may be determined according to Formula 1-2 below as an approximation.

[Formula 1-2]

Upper limit of set luminance value =(luminance information value of display device 3 having lowest luminance information value)/(luminance information value of master display device)

Then, in step S5, the processing/operating unit 25 calculates the set luminance values of the slave display devices, such as the second display device 3b. The set luminance values of the slave display devices are calculated according to Formula 1-3 below. The set luminance values of each slave display devices are calculated by applying Formula 1-3 to each slave display device. Formula 1-3 assumes that the display device controls the backlight so that the set luminance value and luminance value are approximately proportional. In this case, it is preferred to previously adjust the minimum set luminance values of the master and slave display devices to zero.

[Formula 1-3]

Set luminance value of slave display device=set luminance value of master display device×(luminance information value of master display device/luminance information value of slave display device)

For example, assume that the luminance information value of the first display device 3a is 300 cd/m$^2$; the luminance information value of the second display device 3b is 270 cd/m$^2$; and the set luminance value of the first display device 3a is set to 70%. In this case, the set luminance value of the second display device 3b results in 70%×(300/270)=77.8%. Since the luminance level of the second display device 3b tends to be lower than that of the first display device 3a, the luminance levels of the first display device 3a and second display device 3b are matched by making the set luminance value of the second display device 3b larger than that of the first display device 3a.

Then, in step S6, the processing/operating unit 25 transmits, to the respective display devices 3, set luminance value signals indicating the set luminance values of the display devices 3 set or calculated in the above steps. Specifically, the processing/operating unit 25 transmits, to the first display device 3a, a set luminance value signal indicating the set luminance value of the first display device 3a set in step S4, as well as transmits, to the second display device 3b, a set luminance value signal indicating the set luminance value of the second display device 3b calculated in step S5.

The processors 17 of the first display device 3a and the second display devices 3b receive the set luminance value signals through the transmitting/receiving units 21, generate backlight control signals on the basis of the set luminance value signals, and output the backlight control signals to the backlight control circuits 15. The processors 17 may through-output the set luminance value signals as backlight control signals. The backlight control circuits 15 drive the backlights 13 on the basis of the backlight control signals so that the backlights 13 emit visible light.

As seen above, the set luminance values of the display devices 3 included in the multi-monitor system 1 are calculated in such a manner that the luminance levels of the display devices 3 are substantially equalized. In each display device 3, the output of visible light from the backlight 13 is controlled on the basis of the set luminance value calculated with respect to the display device 3.

According to the above method, the luminance levels of the display device 3 included in the multi-monitor system 1 can be matched without the user having to visually match the luminance levels. Further, according to the above method, it is possible to manufacture display devices 3 usable in the multi-monitor system 1 while suppressing the load associated with mass production.

In the present embodiment, an actually measured luminance value or a representative luminance value corresponding to a particular set luminance value is used as a luminance information value. However, a luminance information value is an index indicating the light-emission capability of a display device. Accordingly, a set luminance value corresponding to a particular actually measured luminance value may be used as a luminance information value. For example, assuming that if the user wants to make a particular actually measured luminance value in the "240 cd/m$^2$" and that the maximum luminance of the first display device 3a is 300 cd/m$^2$, the set luminance value of the first display device 3a results in about (240/300)=80%. Assuming that the maximum luminance of the second display device 3b is 270 cd/m$^2$, the set luminance value of the second display device 3b results in (240/270)=about 89%. That is, for the first display device 3a, a set luminance value of 80% results in an actually measured luminance value of "240 cd/m$^2$"; for the second display device 3b, a set luminance value of 89% results in an actually measured luminance value of "240 cd/m$^2$." As seen above, a set luminance value necessary to obtain a particular actually measured luminance value varies among the display devices 3. Accordingly, the luminance levels can be matched by using a set luminance value corresponding to a particular actually measured luminance value.

Examples of a method for matching the luminance levels using a set luminance value corresponding to a particular actually measured luminance value includes a method including converting "a set luminance value corresponding to a particular actually measured luminance value" into "an actually measured luminance value corresponding to a particular set luminance value" in accordance with Formula 1-4 below, and then calculating the set luminance value of a slave display device in accordance with Formula 1-3 above. For example, for the first display device 3a, an actually measured luminance value (maximum luminance) corresponding to a particular set luminance value (maximum value) can be obtained using 240×(100/80)=300.

[Formula 1-4]

Actually measured luminance value corresponding to particular set luminance value=particular actually measured luminance value×(particular set luminance value/set luminance value corresponding to particular actually measured luminance value)

Another method for matching the luminance levels using a set luminance value corresponding to a particular actually measured luminance value is to match the luminance levels by calculating a set luminance value of a slave display device using Formula 1-5 below in place of Formula 1-3. In this case, there is no need to perform conversion using Formula 1-4 above.

[Formula 1-5]

Set luminance value of slave display device=set luminance value of master display device arbitrarily set by user ×(set luminance value of slave display device corresponding to particular actually measured luminance value/set luminance value of master display device corresponding to particular actually measured luminance value)

2. Second Embodiment

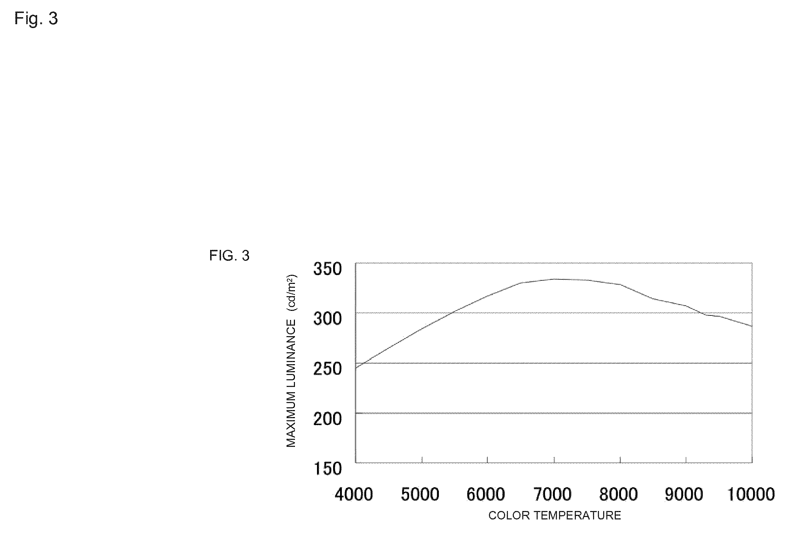

Referring now to Figs. 3 to 5, there will be described a multi-monitor system 1 of a second embodiment of the present invention.

In the first embodiment, the luminance levels are matched on the basis of the luminance information values of the display devices 3 included in the multi-monitor system 1. The luminance information values are calculated without considering color temperature. For example, the luminance levels are matched on the basis of the maximum luminance of full-screen white display obtained by emitting R, G, and B light at the maximum luminance levels.

However, as shown in Fig. 3, the maximum luminance of a display device varies with color temperature, and the variation aspect varies among the display devices 3. Accordingly, when the luminance levels are matched on the basis of the maximum luminance of full-screen white display as in the first embodiment, the luminance levels can be accurately matched at a particular color temperature, but the accuracy of luminance matching may be reduced at other color temperatures. For example, Fig. 3 shows an example of a display device whose RGB gains are maximized around a color temperature of 7000 K. For this reason, the present embodiment provides a multi-monitor system 1 that prevents a reduction in the accuracy of luminance matching even when the color temperature is changed.

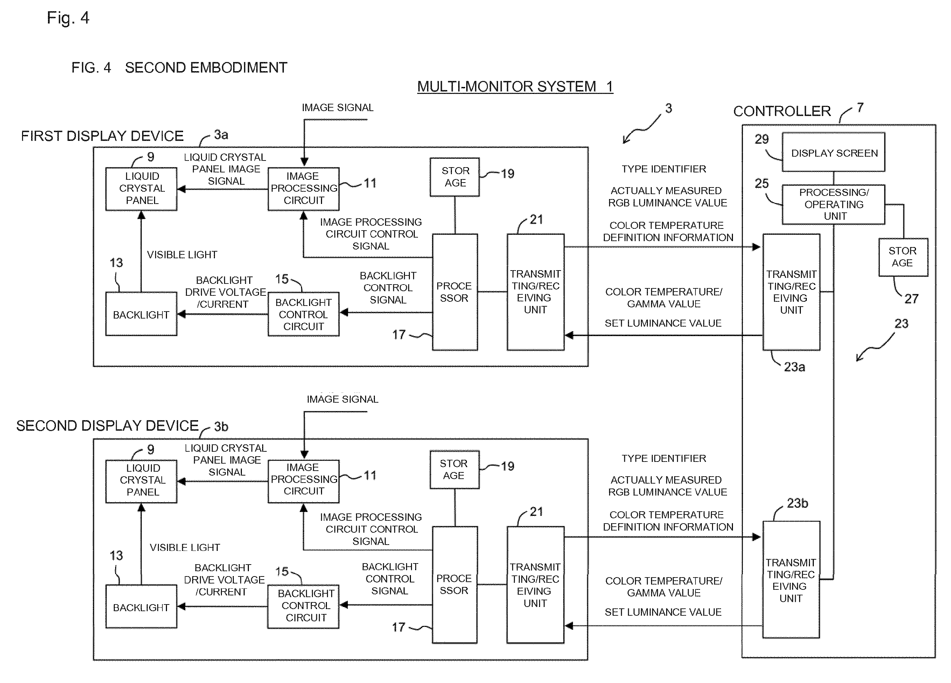

Fig. 4 is a block diagram showing the configuration of a multi-monitor system 1 of a second embodiment of the present invention. Since the multi-monitor system 1 of the second embodiment has the same basic configuration as that of the first embodiment, the differences therebetween will be mainly described.

A processor 17 outputs an image processing circuit control signal to an image processing circuit 11. The image processing circuit 11 converts an image signal received from outside into a signal most suitable for a liquid crystal panel 9 on the basis of the image processing circuit control signal received from the processor 17 and outputs the resulting signal as a liquid crystal panel image signal. The image processing circuit control signal is a signal indicating RGB gain values and a gamma value. During manufacture of a display device 3, the type identifier (e.g., type code) of the display device 3 and actually measured RGB luminance values corresponding to particular set RGB luminance values thereof are stored in the storage 19 thereof. The actually measured RGB luminance values are composed of actually measured luminance values of R, G, and B, and the particular set RGB luminance values are composed of particular set luminance values of R, G, and B (e.g., the maximum values of R, G, and B). Also stored in the storage 19 is color temperature definition information indicating the relationships between multiple color temperatures and RGB gain values for achieving the color temperatures. The actually measured RGB luminance values and color temperature definition information vary among the display devices 3. The processor 17 reads the type identifier and one or both of the actually measured RGB luminance values and color temperature definition information from the storage 19 and transmits them to a controller 7 through a transmitting/receiving unit 21.

In the storage 27 of the controller 7, type identifiers and representative luminance values corresponding to particular set luminance values (e.g., maximum values) at multiple color temperatures are stored so as to be associated with each other. For example, each type identifier and maximum representative luminance values at 14 color temperatures are associated with each other. A representative luminance value can be obtained from the distribution of actually measured luminance values of many display devices of the same type. An average, mode, or the like can be used as a representative value.

The processing/operating unit 25 receives a gamma value, a color temperature, and a set luminance value inputted by the user. The processing/operating unit 25 then performs predetermined calculations on the basis of the inputted information, the actually measured RGB luminance values and color temperature information obtained through the transmitting/receiving unit 23, and the representative luminance values stored in the storage 27 so as to obtain set luminance values to be applied to the display devices 3. The processing/operating unit 25 then transmits the set luminance values along with the color temperature and gamma value to the display devices 3 through the transmitting/receiving unit 23.

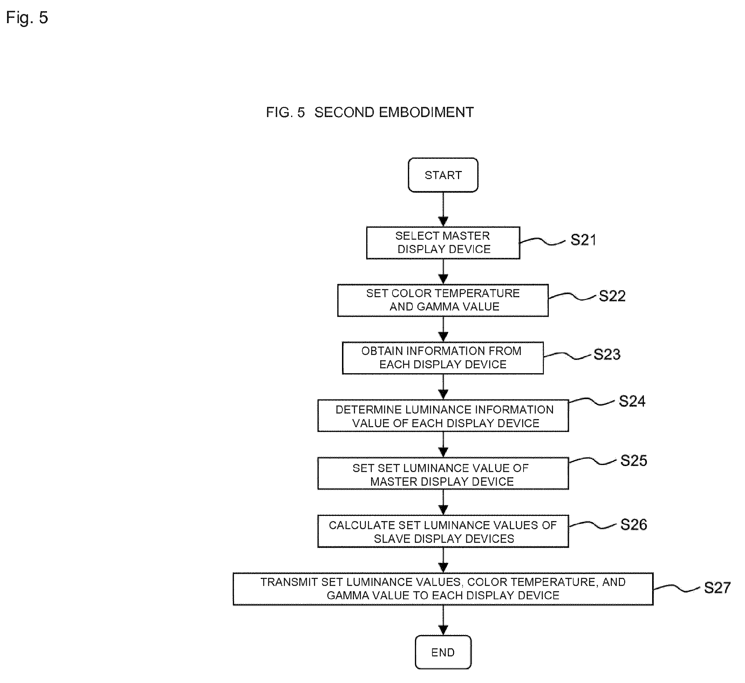

Referring now to a flowchart in Fig. 5, there will be described in detail a method for matching the luminance levels of the display devices 3 included in the multi-monitor system 1. The order of steps in the flowchart of Fig. 5 is only illustrative and may be changed as necessary.

First, in step S21, as in step S1 of the first embodiment, the user selects one of the display devices 3 included in the multi-monitor system 1 as a master display device.

Then, in step S22, the processing/operating unit 25 displays, on a display screen 29, an operation screen for setting a color temperature and a gamma value. The user sets a color temperature and a gamma value on this operation screen, and the processing/operating unit 25 receives these settings.

Then, in step S23, the processing/operating unit 25 reads the type identifier and one or both of actually measured RGB luminance values and color temperature definition information from the storage 19 of each display device included in the multi-monitor system 1.

Then, in step S24, the processing/operating unit 25 determines the luminance information values of the display devices 3 included in the multi-monitor system 1. For a display device 3 storing actually measured RGB luminance values and color temperature definition information in the storage 19, the processing/operating unit 25 calculates the luminance information value according to Formula 2-1 below. In Formula 2-1, color temperature T is the color temperature set in step S22.

[Formula 2-1]

Luminance information value=(actually measured luminance value of R)×(gain value of R at color temperature T)$^\gamma$+(actually measured luminance value of G)×(gain value of G at color temperature T)$^\gamma$+(actually measured luminance value of B)×(gain value of B at color temperature T)$^\gamma$

For example, assume that the user sets the color temperature to 6500 K and the gamma value to 2.2 in step S22; the actually measured RGB luminance values (R, G, and B) of the first display device 3a are (100 cd/m$^2$, 120 cd/m$^2$, 90 cd/m$^2$); and the RGB gain values (R, G, B) at 6500 K are (1, 0.9, 0.78). In this case, the processing/operating unit 25 calculates the luminance information value of the first display device 3a using Formula 2-2 below.

[Formula 2-2]

Luminance information value (6500 K, γ=2.2) of first display device 3a=(100)×(1)$^{2.2}$+(120)×(0.9)$^{2.2}$+(90)×(0.78)$^{2.2}$=247.3

Also assume that the actually measured RGB luminance values (R, G, and B) of the second display device 3b are (110 cd/m$^2$, 100 cd/m$^2$, 120 cd/m$^2$); and the RGB gain values (R, G, B) at 6500 K are (0.9, 1, 0.6). In this case, the processing/operating unit 25 calculates the luminance information value of the second display device 3b using Formula 2-3 below.

[Formula 2-3]

Luminance information value of second display device 3b (6500 K, γ=2.2)=(110)×(0.9)$^{2.2}$+(100)×(1)$^{2.2}$+(120)×(0.6)$^{2.2}$=226.2

For the display device 3 storing no actually measured RGB luminance values or color temperature definition information in the storage 19, the processing/operating unit 25 reads a representative luminance value from the storage 27 in accordance with the type identifier and the color temperature set in step S22 and uses this representative luminance value as a "luminance information value."

Then, in step S25, as in step S4 of the first embodiment, the processing/operating unit 25 displays, on the display screen 29, an operation screen for setting the set luminance value of the first display device 3a serving as a master display device. The user sets the set luminance value of the master display device on this operation screen, and the processing/operating unit 25 receives this setting.

Then, in step S26, as in step S5 of the first embodiment, the processing/operating unit 25 calculates the set luminance values of the slave display devices, including the second display device 3b.

Then, in step S27, the processing/operating unit 25 transmits, to each display device 3, a set luminance value signal indicating the set luminance value of the display device 3 set or calculated in the above steps and a color temperature/gamma value signal indicating the color temperature and gamma value. Specifically, the processing/operating unit 25 transmits, to the first display device 3a, a color temperature/gamma value signal and a set luminance value signal indicating the set luminance value of the first display device 3a, as well as transmits, to the second display device 3b, a color temperature/gamma value signal and a set luminance value signal indicating the set luminance value of the second display device 3b.

The processors 17 of the first display device 3a and the second display device 3b receive the color temperature/gamma value signals and set luminance value signals through the transmitting/receiving units 21, generate image processing circuit control signals on the basis of the color temperature/gamma value signals, and output the image processing circuit control signals to the image processing circuits 11. Further, the processors 17 generate backlight control signals on the basis of the set luminance value signals and output them to backlight control circuits 15. Note that each processor 17 may through-output the color temperature/gamma value signal and set luminance value signal as an image processing circuit control signal and backlight control signal, respectively. The image processing circuits 11 convert image signals received from outside into signals most suitable for liquid crystal panels 9 on the basis of the image processing circuit control signals received from the processors 17 and output the resulting signals as liquid crystal panel image signals. Backlight control circuits 15 drive backlights 13 on the basis of the backlight control signals so that the backlights 13 emit visible light.

As seen above, the set luminance values of the display devices 3 included in the multi-monitor system 1 are calculated in such a manner that the luminance levels of the display devices 3 are substantially equalized. In each display device 3, the output of visible light from the backlight 13 is controlled on the basis of the set luminance value calculated with respect to the display device 3.

By calculating luminance information values using actually measured RGB luminance values and color temperature definition information and matching the luminance levels on the basis of the luminance information values as described above, the luminance levels can be matched accurately regardless of the color temperature.

While the user can set a gamma value in the present embodiment, the gamma value may be fixed to, for example, 2.2. In this case, the processing/operating unit 25 transmits, to each display device 3, a color temperature signal indicating the color temperature in place of a color temperature/gamma value signal. In this case, a luminance information value can be calculated using Formula 2-4 in place of Formula 2-1. In Formula 2-1, a luminance information value is calculated on the basis of actually measured RGB luminance values, RGB gain values, and a gamma value; in Formula 2-4, a luminance information value is calculated on the basis of actually measured RGB luminance values and RGB gain values. That is, a luminance information value can be calculated on the basis of at least actually measured RGB luminance values and RGB gain values. It is optional whether the gamma value is used as a variable in calculating a luminance information value. In Formula 2-4, the exponent may be another value (e.g., 2) in place of "2.2."

[Formula 2-4]

Luminance information value=(actually measured luminance value of R)×(gain value of R at color temperature T)$^{2.2}$+(actually measured luminance value of G)×(gain value of G at color temperature T)$^{2.2}$+(actually measured luminance value of B)×(gain value of B at color temperature T)$^{2.2}$

As a modification, actually measured luminance values corresponding to particular set luminance values (e.g., maximum values) at multiple color temperatures may be stored in the storage 19 of at least one display device 3. In this case, in step S24, an actually measured luminance value corresponding to the color temperature set in step S22 can be used as a "luminance information value."

3. Third Embodiment

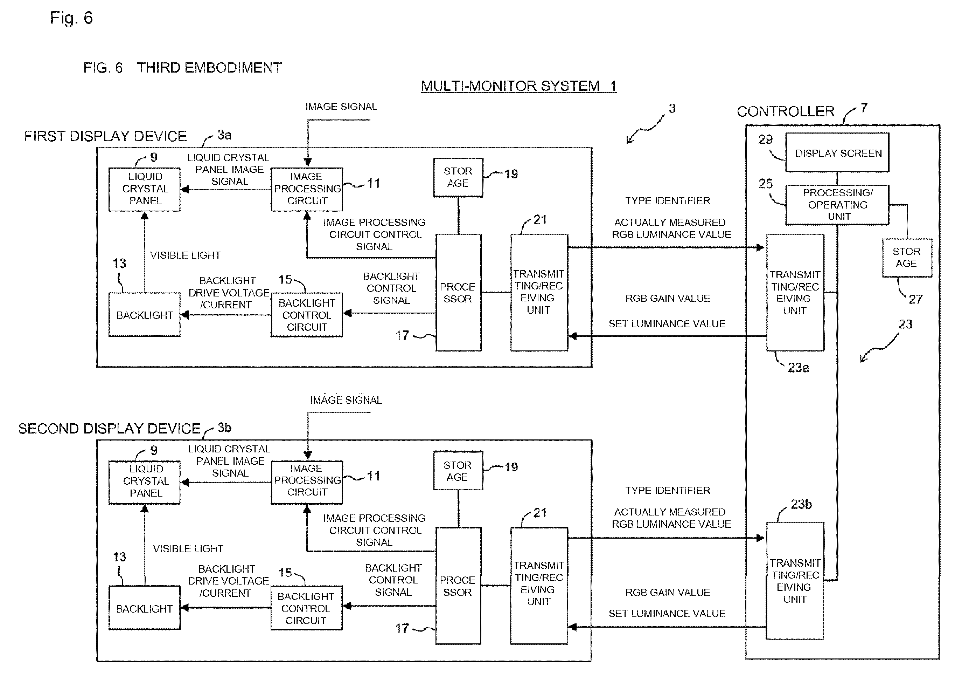

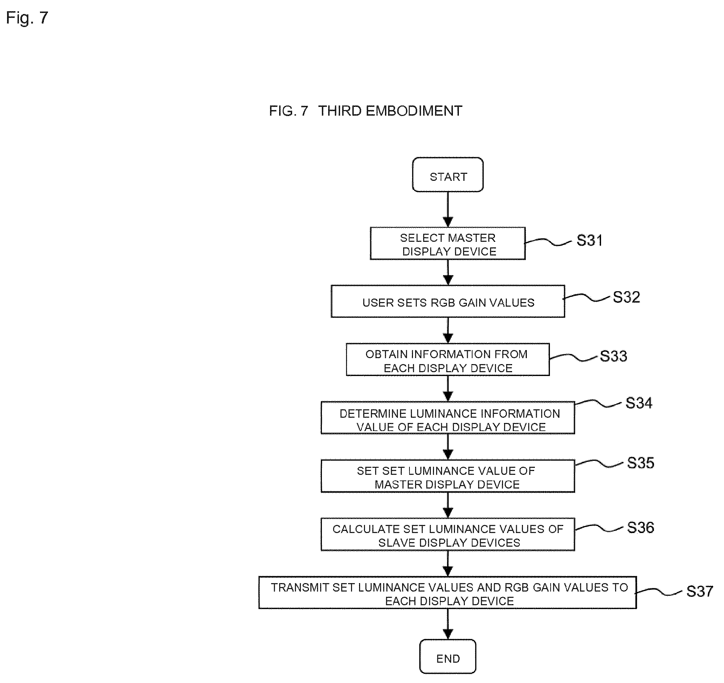

Referring now to Figs. 6 and 7, there will be described a multi-monitor system 1 of a third embodiment of the present invention.

As shown in Fig. 6, the multi-monitor system 1 of the present embodiment has a basic configuration similar to that of the second embodiment and mainly differs therefrom in data stored in a controller 7. In the storage 27 of the controller 7 of the second embodiment, type identifiers and representative luminance values corresponding to particular set luminance values (e.g., maximum values) at multiple color temperatures are stored so as to be associated with each other. However, these pieces of data are not sufficient to cope with a case where the user arbitrarily sets RGB gain values.

For this reason, in a storage 27 of a controller 7 of the present embodiment, in place of the pieces of data stored in the storage 27 of the second embodiment or in addition to the pieces of data, representative RGB luminance values corresponding to particular set RGB luminance values and type identifiers are stored so as to be associated with each other. The representative RGB luminance values are representative luminance values of R, G, and B, and the particular set RGB luminance values are composed of particular set luminance values of R, G, and B(e.g., the maximum values of R, G, and B). The representative RGB luminance values are used to calculate a luminance information value when no actually measured RGB luminance values are stored in the storage 19 of a display device 3 and when the user arbitrarily sets RGB gain values. Representative RGB luminance values can be obtained from the distribution of actually measured RGB luminance values of many display devices of the same type. An average, mode, or the like can be used as a representative value.

Referring now to a flowchart in Fig. 7, there will be described in detail a method for matching the luminance levels of the display devices 3 included in the multi-monitor system 1. The order of steps in the flowchart of Fig. 7 is only illustrative and may be changed as necessary.

First, in step S31, as in step S21 of the second embodiment, the user selects one of the display devices 3 included in the multi-monitor system 1 as a master display device.

Then, in step S32, a processing/operating unit 25 displays, on a display screen 29, an operation screen on which the user arbitrarily sets RGB gain values. The user sets RGB gain values on this operation screen, and the processing/operating unit 25 receives this settings. While the gamma value is fixed to 2.2 in the present embodiment, the user may set a gamma value as in the second embodiment.

Then, in step S33, the processing/operating unit 25 reads one or both of the type identifier and actually measured RGB luminance values from the storage 19 of each display device included in the multi-monitor system 1.

Then, in step S34, the processing/operating unit 25 determines the luminance information value of each display device 3 included in the multi-monitor system 1. For a display device 3 having actually measured RGB luminance values in the storage 19, the processing/operating unit 25 uses the actually measured RGB luminance values as RGB luminance information values composed of luminance information values of R, G, and B. For a display device 3 storing no actually measured RGB luminance values in the storage 19, the processing/operating unit 25 reads representative RGB luminance values from the storage 27 in accordance with the type identifier and uses these representative RGB luminance values as RGB luminance information values. As seen above, in the present embodiment, the RGB luminance information values are actually measured RGB luminance values or representative RGB luminance values.

A luminance information value can be calculated according to Formula 3-1 below.

[Formula 3-1]

$$\text{Luminance information value} = (\text{luminance information value of R}) \times (\text{gain value of R set by user})^\gamma + (\text{luminance information value of G}) \times (\text{gain value of G set by user})^\gamma + (\text{luminance information value of B}) \times (\text{gain value of B set by user})^\gamma$$

Then, as in steps S25 to S27 of the second embodiment, steps S35 and S36 are performed.

Then, in step S37, the processing/operating unit 25 transmits, to each display device 3, a set luminance value signal indicating the set luminance value of the display device 3 set or calculated in the above steps and an RGB gain value signal indicating RGB gain values. Specifically, the processing/operating unit 25 transmits, to the first display device 3a, an RGB gain value signal and a set luminance value signal indicating the set luminance value of the first display device 3a, as well as transmits, to the second display device 3b, an RGB gain value signal and a set luminance value signal indicating the set luminance value of the second display device 3b.

The processors 17 of the first display device 3a and the second display device 3b receive the RGB gain value signals and set luminance value signals through transmitting/receiving units 21, generate image processing circuit control signals on the basis of the RGB gain value signals, and output the image processing circuit control signals to image processing circuits 11. Further, the processors 17 generate backlight control signals on the basis of the set luminance value signals and output them to backlight control circuits 15. Note that each processor 17 may through-output the RGB gain value signal and set luminance value signal as an image processing circuit control signal and a backlight control signal, respectively. The image processing circuits 11 convert image signals received from outside into signals most suitable for liquid crystal panels 9 on the basis of the image processing circuit control signals received from the processors 17 and outputs the resulting signals as liquid crystal panel image signals. The backlight control circuits 15 drive backlights 13 on the basis of the backlight control signals so that the backlights 13 emit visible light.

As seen above, set luminance values of the display devices 3 included in the multi-monitor system 1 are calculated in such a manner that the luminance levels of the display devices 3 are substantially equalized. In each display device 3, the output of visible light from the backlight 13 is controlled on the basis of the set luminance value calculated with respect to the display device 3.

By calculating luminance information values using RGB luminance information values and RGB gain values arbitrarily set by the user and matching the luminance levels on the basis of the luminance information values as described above, the luminance levels can be matched accurately regardless of the RGB gain values.

The second embodiment and third embodiment can be combined. In this case, in step S32, the processing/operating unit 25 displays, on the display screen 29, an operation screen on which the user sets RGB gain values or color temperature. When the user sets RGB gain values, the processing/operating unit 25 may perform steps S33 to S37; when the user sets a color temperature, the processing/operating unit 25 may perform steps S23 to S27 of the second embodiment. The gamma value may be fixed or may be set by the user.

If the gamma value is fixed, a luminance information value can be calculated using Formula 3-2 in place of Formula 3-1. In Formula 3-1, a luminance information value is calculated on the basis of RGB luminance information values, RGB gain values, and a gamma value; in Formula 3-2, a luminance information value is calculated on the basis of RGB luminance information values and RGB gain values. That is, a luminance information value can be calculated on the basis of at least RGB luminance information values and RGB gain values. It is optional whether the gamma value is used as a variable in calculating a luminance information value. In Formula 3-2, the exponent may be another value (e.g., 2) in place of "2.2."

[Formula 3-2]

Luminance information value=(luminance information value of R)×(gain value of R set by user)$^{2.2}$+(luminance information value of G)×(gain value of G set by user)$^{2.2}$+(luminance information value of B)×(gain value of B set by user)$^{2.2}$

In the second and third embodiments, actually measured RGB luminance values or representative RGB luminance values corresponding to particular set luminance values are used to calculate a luminance information value. Alternatively, set RGB luminance values composed of set luminance values of R, G, and B corresponding to particular actually measured RGB luminance values may be used. For example, assuming that particular actually measured RGB luminance values (R, G, and B) are (80 cd/m$^2$, 80 cd/m$^2$, 85 cd/m$^2$) and that the maximum RGB luminance values (R, G, and B) of the first display device 3a are (100 cd/m$^2$, 120 cd/m$^2$, 90 cd/m$^2$), the set RGB luminance values (R, G, and B) of the first display device 3a result in (80/ 100, 80/ 120, 85/90)=approximately (80%, 67%, 94%). Set RGB luminance values corresponding to particular actually measured RGB luminance values vary among the display devices 3, and the luminance levels can be matched by using the set RGB luminance values.
Examples of a method for matching the luminance levels using set RGB luminance values corresponding to particular actually measured RGB luminance values include a method including converting "set RGB luminance values corresponding to particular actually measured RGB luminance values" into "actually measured RGB luminance values corresponding to particular set RGB luminance values" in accordance with Formula 3-3 below and then calculating the set luminance values of the slave display devices in accordance with Formula 2-1, Formula 2-4, Formula 3-1, or Formula 3-2 above. For example, with respect to G, an actually measured luminance value corresponding to a particular set luminance value (90%) can be obtained using 80×(90/67)=107.4.

[Formula 3-3]

Actually measured RGB luminance value corresponding to particular set RGB luminance value=particular actually measured RGB luminance value×(particular set RGB luminance value/set RGB luminance value corresponding to particular actually measured RGB luminance value)

4. Fourth Embodiment

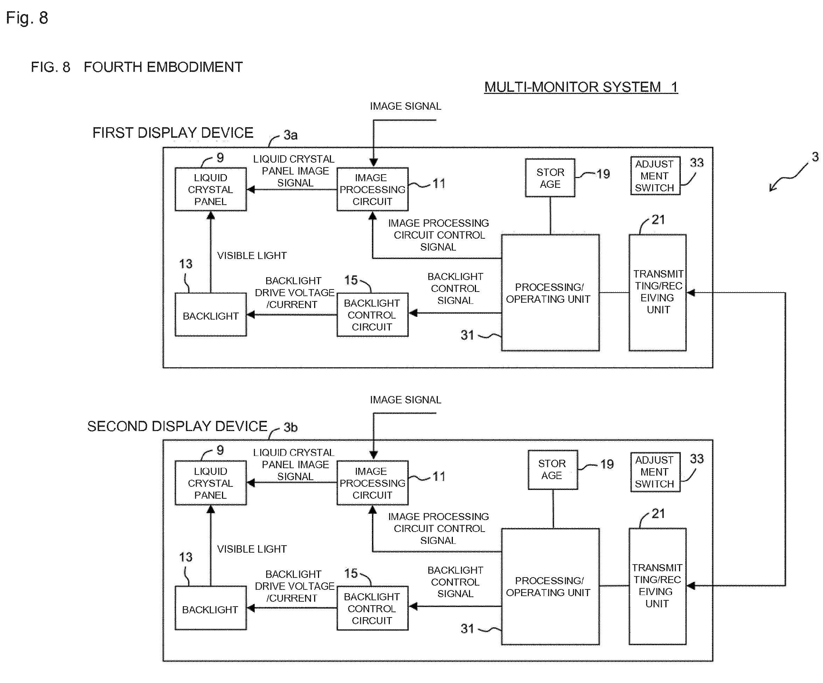

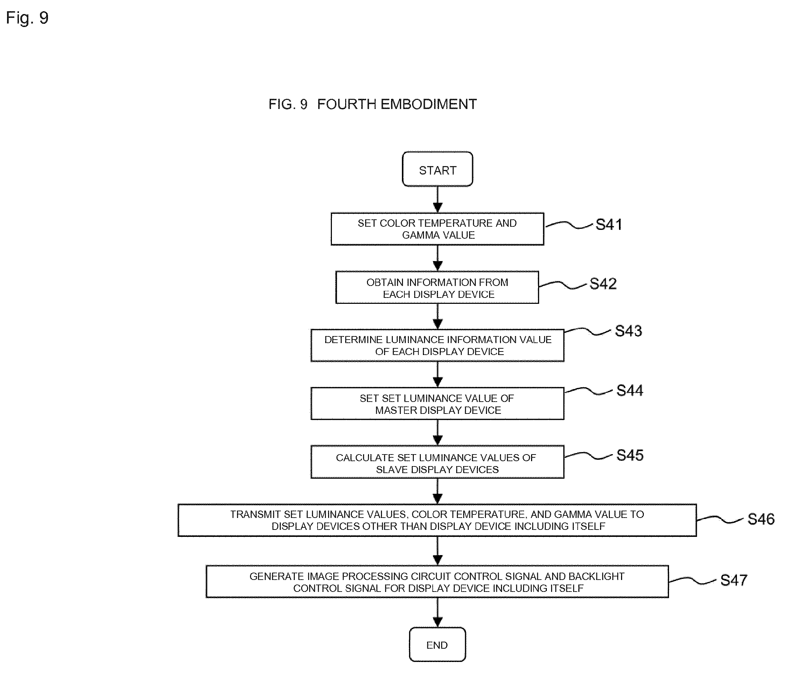

Referring now to Figs. 8 and 9, there will be described a multi-monitor system 1 of a fourth embodiment of the present invention.
In the first to third embodiments, the controller 7 is disposed independently of the display devices 3, and the processing/operating unit 25 of the controller 7 performs setting of set luminance values, calculations, and the like. As shown in Fig. 8, the multi-monitor system 1 of the present embodiment includes no controller 7, and multiple display devices 3 communicate with each other directly. While Fig. 8 shows only two display devices 3, the number of display devices 3 may be three or more. The display devices 3 may communicate with each other wirelessly or by wire.
In the present embodiment, each display device 3 includes a processing/operating unit 31 serving as both the processor 17 and the processing/operating unit 25 of the controller 7. The storage 19 of each display device 3 is storing both the data stored in the storage 19 of the second embodiment and the data stored in the storage 27 of the controller 7 of the second embodiment. Note that if luminance matching based on representative luminance values is not performed, there is no need for the data in the storage 27.
Referring now to a flowchart in Fig. 9, there will be described in detail a method for matching the luminance levels of the display devices 3 included in the multi-monitor system 1. The order of steps in the flowchart of Fig. 9 is only illustrative and may be changed as necessary. The operation of the processing/operating unit 31 of the present embodiment is basically the combination of the operations of the processor 17 and processing/operating unit 25 of the second embodiment. For this reason, the difference between the present embodiment and second embodiment will be mainly described below.
First, the user starts to make settings for luminance matching by operating an adjustment switch 33 of a display device 3 that the user wants to use as a master display device. Then, in step S41, the processing/operating unit 31 displays, on a liquid crystal panel 9, an operation screen for setting a color temperature and a gamma value. The user sets a color temperature and a gamma value on this operation screen, and the processing/operating unit 31 receives these settings. In the present embodiment, the display device 3 whose adjustment switch 33 has been pressed serves as a master display device. Accordingly, there is no need for a step corresponding to step S21 of the second embodiment. There may be employed a configuration in which a display device other than the display device 3 whose adjustment switch 33 has been pressed can be selected as a master display device. In this case, a step corresponding to step S21 of the second embodiment may be provided prior to step S41.

Assuming that a first display device 3a is set as a master display device on the basis of an operation of the adjustment switch 33 thereof and that a second display device 3b and the other display devices are set as slave display devices, a description will be made below.

Then, in step S42, the processing/operating unit 31 reads the type identifier and one or both of actually measured RGB luminance values and color temperature definition information from the storage 19 of each display device 3 included in the multi-monitor system 1. The processing/operating unit 31 obtains such information by directly accessing the storage 19 of the first display device 3a and accessing the storage 19 of the second display device 3b through a transmitting/receiving unit 21.

Then, as in steps S24 to S26 of the second embodiment, the processing/operating unit 31 performs steps S43 to S45.

Then, in step S46, the processing/operating unit 31 transmits, to the display devices 3 other than the display device 3 including itself, set luminance value signals indicating the set luminance values of the display devices 3 calculated in the above steps and color temperature/gamma value signals indicating the color temperature and gamma value.

Then, in step S47, the processing/operating unit 31 generates an image processing circuit control signal on the basis of the color temperature and gamma value set in step S41 and outputs the image processing circuit control signal to an image processing circuit 11 of the display device 3 including itself. The processing/operating unit 31 also generates a backlight control signal on the basis of the set luminance value set in step S44 and outputs the backlight control signal to a backlight control circuit 15 of the display device 3 including itself.

As seen above, even when no controller 7 is provided, the luminance levels can be matched as in the second embodiment by disposing a processing/operating unit 31 in each display device 3 and performing the above method.

In the present embodiment, the operation of the processing/operating unit 31 is basically the combination of the operations of the processor 17 and processing/operating unit 25 of the second embodiment. Alternatively, there may be employed a configuration in which the operation of the processing/operating unit 31 is basically the combination of the operations of the processor 17 and processing/operating unit 25 of the first or third embodiment. While, in the present embodiment, processing/operating units 31 are disposed in all the display devices 3, processing/operating units 31 may be disposed only in some display devices 3.

5. Fifth Embodiment

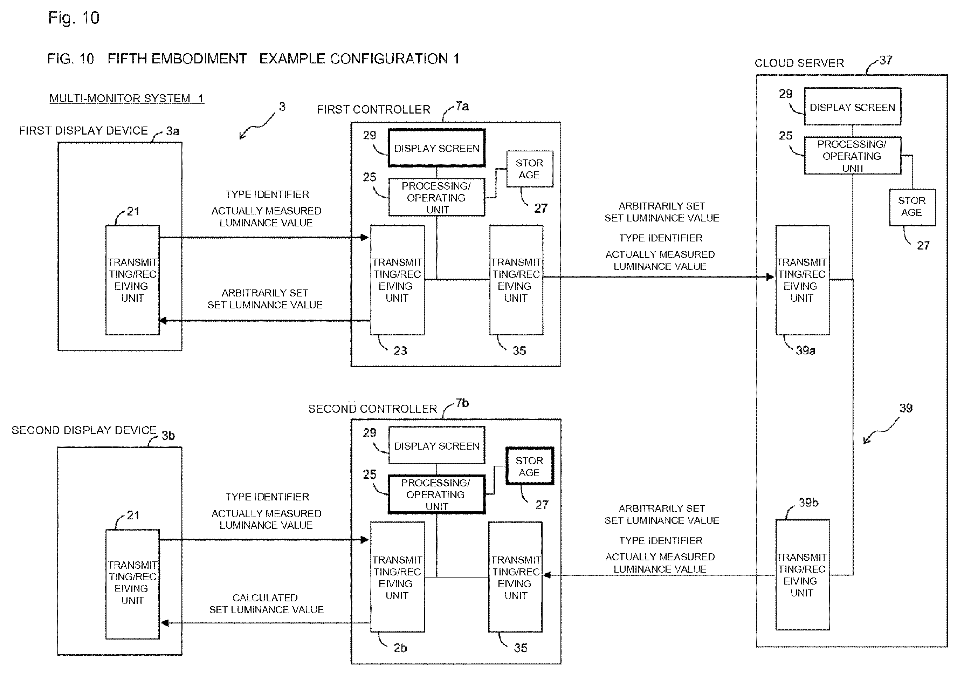

Referring now to Figs. 10 to 14, there will be described a multi-monitor system 1 of a fifth embodiment of the present invention.

The present embodiment is similar to the first embodiment and mainly differs therefrom in that display devices 3 included in the multi-monitor system 1 can communicate with a cloud server 37. The following description will focus on the difference. The cloud server 37 is a server that allows multiple computers disposed on a network (preferably, Internet) to exchange data with one another. The present embodiment aims to easily match the luminance levels of multiple display devices 3 located away from one another. According to the present embodiment, it is possible to match the luminance levels of a monitor for a medical doctor and a monitor for a patient, match the luminance levels of remote monitors at a WEB conference or in the printing industry (simple level), or match the luminance levels of all monitors at an office for VDT purposes (anti-eyestrain, etc.).

As shown in Figs. 10 to 14, the multi-monitor system 1 of the present embodiment includes a first display device 3a, a first controller 7a that can communicate with the first display device 3a, a second display device 3b, a second controller 7b that can communicate with the second display device 3b, and a cloud server 37 that can communicate with the controllers 7a, 7b. The display devices 3a, 3b, and the controllers 7a, 7b will be collectively referred to as the display device 3 and controller 7, respectively, when there is no need to distinguish therebetween.

The configuration of the display device 3 is similar to that in the first embodiment and therefore only a transmitting/receiving unit 21 thereof is shown. The configuration of the controller 7 is similar to that in the first embodiment except for the configuration of a transmitting/receiving unit thereof. The transmitting/receiving unit is composed of a display device-side transmitting/receiving unit 23 that transmits and receives signals to and from the display device 3 and a cloud server-side transmitting/receiving unit 35 that transmits and receives signals to and from the cloud server 37. The configuration of the cloud server 37 is similar to that of the controller 7 of the first embodiment except for a transmitting/receiving unit thereof. A transmitting/receiving unit 39 of the cloud server 37 is composed of a first transmitting/receiving unit 39a that transmits and receives signals to and from the first controller 7a and a second transmitting/receiving unit 39b that transmits and receives signals to and from the second controller 7b.

In the first embodiment, the display devices 3a, 3b communicate with each other directly or through the controller 7; in the present embodiment, as shown in Figs. 10 to 14, the display devices 3a, 3b communicate with each other through the cloud server 37. In the first embodiment, the luminance levels are matched using the display screen 29, processing/operating unit 25, and storage 27 in the single controller 7; in the present embodiment, as shown in Figs. 10 to 12, these elements are distributed to the controllers 7a, 7b and cloud server 37. Note that in Figs. 10 to 14, the display screen 29, processing/operating unit 25, and storage 27 which are mainly used to match the luminance levels are shown by thick lines. The display screens 29, processing/operating units 25, and storages 27 except for those shown by the thick lines may be removed if they are unnecessary. The controllers 7a, 7b may also be removed if they are unnecessary.

In an example configuration 1 shown in Fig. 10, the user arbitrarily sets a set luminance value on the display screen 29 of the first controller 7a, and the first controller 7a transmits the set luminance value to the first display device 3a. The first controller 7a also transmits the set luminance value arbitrarily set by the user along with the type identifier and actually measured luminance value of the first display device 3a to the second controller 7b through the cloud server 37. The second controller 7b also receives, from the second display device 3b, the type identifier and actually measured luminance value of the second display device 3b. The processing/operating unit 25 of the second controller 7b calculates a set luminance value to be set for the second display device 3b using a method similar to that of the first embodiment on the basis of the received data and a representative luminance value stored in the storage 27 and transmits the set luminance value to the second display device 3b.

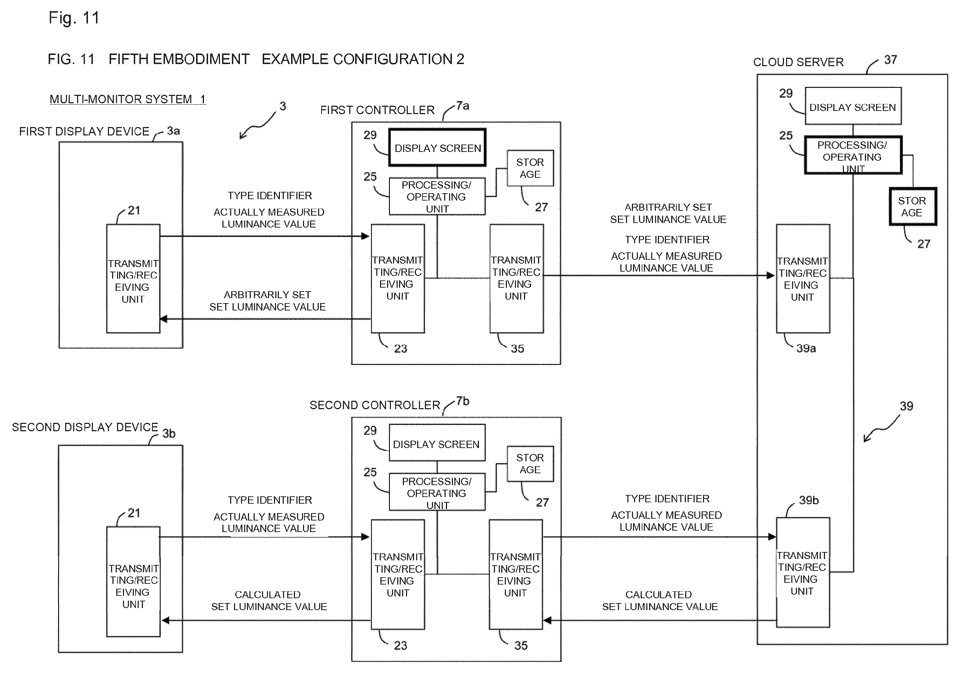

In an example configuration 2 shown in Fig. 11, the operation of the first controller 7a is the same as that in the example configuration 1, but the operations of the cloud server 37 and second controller 7b differ from those in the example configuration 1. In this example configuration, the processing/operating unit 25 of the cloud server 37 calculates a set luminance value to be set for the second display device 3b using a method similar to that of the first embodiment on the basis of data received from the first controller 7a, the type identifier and actually measured luminance value of the second display device 3b received through the second controller 7b, and a representative luminance value stored in the storage 27. The processing/operating unit 25 then transmits the calculated set luminance value to the second display device 3b through the second controller 7b. In this example configuration, the second controller 7b may be removed.

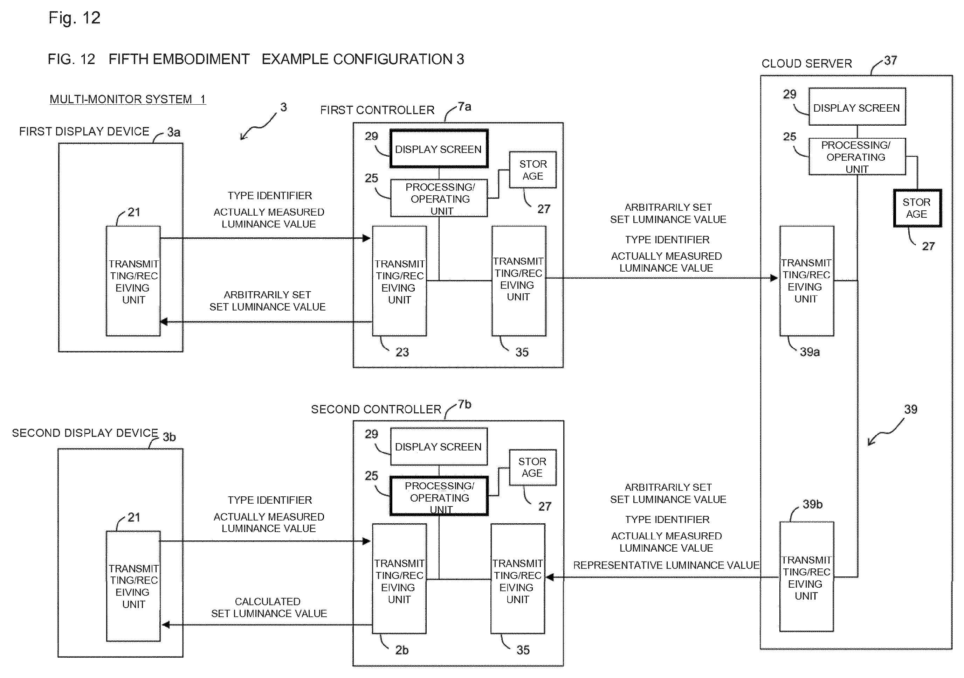

In an example configuration 3 shown in Fig. 12, the operation of the first controller 7a is the same as that in the example configuration 1, but the operations of the cloud server 37 and second controller 7b differ from those in the example configuration 1. In this example configuration, the cloud server 37 transmits data received from the first controller 7a along with a representative luminance value stored in the storage 27 of the cloud server 37 to the second controller 7b. The second controller 7b also receives, from the second display device 3b, the type identifier and actually measured luminance value of the second display device 3b. The processing/operating unit 25 of the second controller 7b calculates a set luminance value to be set for the second display device 3b using a method similar to that of the first embodiment on the basis of the received data and transmits the set luminance value to the second display device 3b.

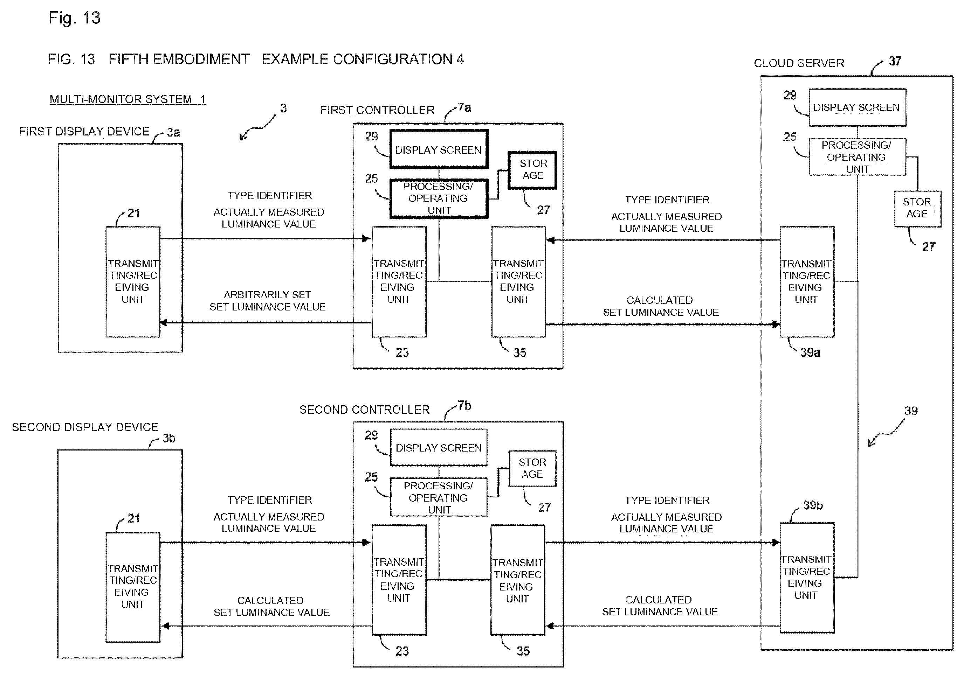

In an example configuration 4 shown in Fig. 13, the luminance levels are matched using the display screen 29, processing/operating unit 25, and storage 27 in the first controller 7a. This example configuration is similar to the first embodiment except that the first controller 7a and second display device 3b communicate with each other through the second controller 7b and cloud server 37. In this example configuration, the second controller 7b may be removed.

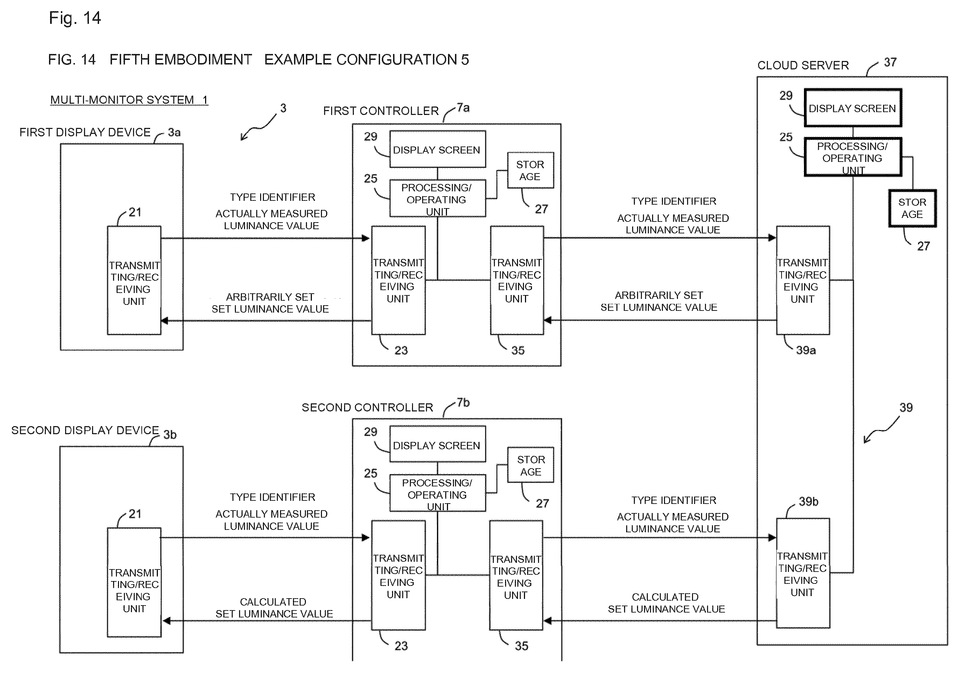

In an example configuration 5 shown in Fig. 14, the luminance levels are matched using the display screen 29, processing/operating unit 25, and storage 27 in the cloud server 37. In this example configuration, the cloud server 37 serves as the controller 7 of the first embodiment. In this example configuration, the controllers 7a, 7b may be removed.

While, in the above example configurations, a single display device is connected to a single controller, multiple display devices may be connected to a single controller as in the first embodiment. A configuration using the cloud server 37 as in the present embodiment can also be applied to the second to fourth embodiments.

6. Others

In the first to fifth embodiments, the luminance levels are matched by controlling the output of visible light from the backlight 13 in each display device 3 including the liquid crystal panel 9. However, the present invention is not limited to multi-monitor systems including display devices each provided with the liquid crystal panel 9. The present invention can also be applied to multi-monitor systems including display devices each provided with another type of display panel, such as an organic EL panel. For example, with respect to an organic EL panel, the luminance levels can be matched by controlling the amount of the current passing through a light emitting layer and thus adjusting the luminance levels.

**EP 3 010 009 A1**

**Claims**

1. A multi-monitor system including a plurality of display devices, the multi-monitor system comprising:

    a processor that, on the basis of respective luminance information values of a particular display device and the other display device of the plurality of display devices, and a set luminance value of the particular display device arbitrarily set by a user, calculates set luminance value of the other display device in such a manner that luminance level of the other display device becomes substantially equal to a luminance level of the particular display device.

2. The multi-monitor system of Claim 1,
wherein the luminance information value of at least one of the plurality of display devices is an actually measured luminance value corresponding to a particular set luminance value.

3. The multi-monitor system of Claim 1 or 2,
wherein the luminance information value of at least one of the plurality of display devices is a representative luminance value corresponding to a particular set luminance value of a display device of the same type.

4. The multi-monitor system of any one of Claims 1 to 3,
wherein the luminance information value of at least one of the plurality of display devices is calculated on the basis of at least RGB luminance information values and RGB gain values, the RGB luminance information values being composed of luminance information values of R, G, and B.

5. The multi-monitor system of Claim 4,
wherein the RGB luminance information values of at least one of the plurality of display devices are actually measured RGB luminance values corresponding to particular set RGB luminance values, the actually measured RGB luminance values being composed of actually measured luminance values of R, G, and B, the particular set RGB luminance values being composed of particular set luminance values of R, G, and B.

6. The multi-monitor system of Claim 4 or 5,
wherein the RGB gain values are values set so that color temperatures of the plurality of display devices are equalized, or values arbitrarily set by a user.

7. The multi-monitor system of any one of Claims 1 to 6,
wherein the luminance information value of at least one of the plurality of display devices is determined according to a particular color temperature arbitrarily set by a user.

8. The multi-monitor system of any one of Claims 1 to 7,
wherein the set luminance value of the particular display device is a maximum value.

9. The multi-monitor system of Claim 1,
wherein the luminance information value of at least one of the plurality of display devices is a set luminance value corresponding to a particular actually measured luminance value.

10. The multi-monitor system of Claim 4,
wherein the RGB luminance information values of at least one of the plurality of display devices are set RGB luminance values corresponding to particular actually measured RGB luminance values, the set RGB luminance values being composed of set luminance values of R, G, and B.

11. The multi-monitor system of any one of Claims 1 to 8,
wherein the processor is disposed in one of the display devices in the multi-monitor system or disposed in a controller, the controller being disposed independently of the display devices.

12. The multi-monitor system of any one of Claims 1 to 11,
wherein the display devices included in the multi-monitor system are configured to communicate with a cloud server.

13. A computer program used by a multi-monitor system including a plurality of display devices, the computer program causing a computer to perform:

a step of, on the basis of respective luminance information values of a particular display device and the other display device of the plurality of display devices, and a set luminance value of the particular display device arbitrarily set by a user, calculating set luminance value of the other display device in such a manner that luminance level of the other display device becomes substantially equal to a luminance level of the particular display device.

14. The computer program of Claim 13,
wherein the luminance information value of at least one of the plurality of display devices is an actually measured luminance value corresponding to a particular set luminance value.

15. The computer program of Claim 13 or 14,
wherein the luminance information value of at least one of the plurality of display devices is a representative luminance value corresponding to a particular set luminance value of a display device of the same type.

16. The computer program of any one of Claims 13 to 15,
wherein the luminance information value of at least one of the plurality of display devices is calculated on the basis of at least RGB luminance information values and RGB gain values, the RGB luminance information values being composed of luminance information values of R, G, and B.

17. The computer program of Claim 16,
wherein the RGB luminance information values of at least one of the plurality of display devices are actually measured RGB luminance values corresponding to particular set RGB luminance values, the actually measured RGB luminance values being composed of actually measured luminance values of R, G, and B, the particular set RGB luminance values being composed of particular set luminance values of R, G, and B.

18. The computer program of Claim 16 or 17,
wherein the RGB gain values are values set so that color temperatures of the plurality of display devices are equalized, or values arbitrarily set by a user.

19. The computer program of any one of Claims 13 to 18,
wherein the luminance information value of at least one of the plurality of display devices is determined according to a particular color temperature arbitrarily set by a user.

20. The computer program of any one of Claims 13 to 19,
wherein the set luminance value of the particular display device is a maximum value.

21. The computer program of Claim 13,
wherein the luminance information value of at least one of the plurality of display devices is a set luminance value corresponding to a particular actually measured luminance value.

22. The computer program of Claim 16,
wherein the RGB luminance information values of at least one of the plurality of display devices are set RGB luminance values corresponding to particular actually measured RGB luminance values, the set RGB luminance values being composed of set luminance values of R, G, and B.

23. The computer program of any one of Claims 13 to 22,
wherein the display devices included in the multi-monitor system are configured to communicate with a cloud server.

24. A display device used in a multi-monitor system including a plurality of display devices, the display device comprising:

a processor that, on the basis of respective luminance information values of a particular display device and the other display device of the plurality of display devices, and a set luminance value of the particular display device arbitrarily set by a user, calculates set luminance value of the other display device in such a manner that luminance level of the other display device becomes substantially equal to a luminance level of the particular display device; and
a transmitting unit that transmits the set luminance value calculated by the processor to the other display device.

25. The display device of Claim 24,

wherein the luminance information value of at least one of the plurality of display devices is an actually measured luminance value corresponding to a particular set luminance value.

26. The display device of Claim 24 or 25,
wherein the luminance information value of at least one of the plurality of display devices is a representative luminance value corresponding to a particular set luminance value of a display device of the same type.

27. The display device of any one of Claims 24 to 26,
wherein the luminance information value of at least one of the plurality of display devices is calculated on the basis of at least RGB luminance information values and RGB gain values, the RGB luminance information values being composed of luminance information values of R, G, and B.

28. The display device of Claim 27,
wherein the RGB luminance information values of at least one of the plurality of display devices are actually measured RGB luminance values corresponding to particular set RGB luminance values, the actually measured RGB luminance values being composed of actually measured luminance values of R, G, and B, the particular set RGB luminance values being composed of particular set luminance values of R, G, and B.

29. The display device of Claim 27 or 28,
wherein the RGB gain values are values set so that color temperatures of the plurality of display devices are equalized, or values arbitrarily set by a user.

30. The display device of any one of Claims 24 to 29,
wherein the luminance information value of at least one of the plurality of display devices is determined according to a particular color temperature arbitrarily set by a user.

31. The display device of any one of Claims 24 to 30,
wherein the set luminance of the particular display device is a maximum value.

32. The display device of Claim 24,
wherein the luminance information value of at least one of the display devices is a set luminance value corresponding to a particular actually measured luminance value.

33. The display device of Claim 27,
wherein the RGB luminance information values of at least one of the plurality of display devices are set RGB luminance values corresponding to particular actually measured RGB luminance values, the set RGB luminance values being composed of set luminance values of R, G, and B.

Fig. 1

FIG. 1   FIRST EMBODIMENT

MULTI-MONITOR SYSTEM  1

IMAGE SIGNAL

CONTROLLER  7

FIRST DISPLAY DEVICE  3a

9

LIQUID CRYSTAL PANEL IMAGE SIGNAL

LIQUID CRYSTAL PANEL

IMAGE PROCESSING CIRCUIT  11

STORAGE  19

29  DISPLAY SCREEN

25  PROCESSING/ OPERATING UNIT

TYPE IDENTIFIER

ACTUALLY MEASURED LUMINANCE VALUE

21

13

VISIBLE LIGHT

BACKLIGHT DRIVE VOLTAGE /CURRENT

15

BACKLIGHT CONTROL CIRCUIT

BACKLIGHT CONTROL SIGNAL

PROCESSOR

TRANSMITTING/RECEIVING UNIT

TRANSMITTING/RECEIVING UNIT

STORAGE

27

BACKLIGHT

17

SET LUMINANCE VALUE

23

23a

IMAGE SIGNAL

SECOND DISPLAY DEVICE  3b

9

LIQUID CRYSTAL PANEL IMAGE SIGNAL

LIQUID CRYSTAL PANEL

IMAGE PROCESSING CIRCUIT  11

STORAGE  19

23b

TYPE IDENTIFIER

ACTUALLY MEASURED LUMINANCE VALUE

21

13

VISIBLE LIGHT

BACKLIGHT DRIVE VOLTAGE /CURRENT

15

BACKLIGHT CONTROL CIRCUIT

BACKLIGHT CONTROL SIGNAL

PROCESSOR

TRANSMITTING/RECEIVING UNIT

TRANSMITTING/RECEIVING UNIT

BACKLIGHT

17

SET LUMINANCE VALUE

EP 3 010 009 A1

Fig. 2

FIG. 2  FIRST EMBODIMENT

```
        ┌──────────┐
        │  START   │
        └──────────┘
             │
             ▼
   ┌──────────────────────┐
   │   SELECT MASTER      │──── S1
   │   DISPLAY DEVICE     │
   └──────────────────────┘
             │
             ▼
   ┌──────────────────────┐
   │ OBTAIN INFORMATION   │──── S2
   │ FROM EACH DISPLAY    │
   │       DEVICE         │
   └──────────────────────┘
             │
             ▼
   ┌──────────────────────────┐
   │ DETERMINE LUMINANCE      │──── S3
   │ INFORMATION VALUE OF     │
   │ EACH DISPLAY DEVICE      │
   └──────────────────────────┘
             │
             ▼
   ┌──────────────────────────┐
   │ SET SET LUMINANCE VALUE  │──── S4
   │ OF MASTER DISPLAY DEVICE │
   └──────────────────────────┘
             │
             ▼
   ┌──────────────────────────┐
   │ CALCULATE SET LUMINANCE  │──── S5
   │ VALUES OF SLAVE DISPLAY  │
   │       DEVICES            │
   └──────────────────────────┘
             │
             ▼
   ┌──────────────────────────┐
   │ TRANSMIT SET LUMINANCE   │──── S6
   │ VALUES TO EACH DISPLAY   │
   │       DEVICES            │
   └──────────────────────────┘
             │
             ▼
        ┌──────────┐
        │   END    │
        └──────────┘
```

Fig. 3

FIG. 3

MAXIMUM LUMINANCE (cd/m²)

350

300

250

200

150

4000   5000   6000   7000   8000   9000   10000

COLOR TEMPERATURE

Fig. 4

FIG. 4   SECOND EMBODIMENT

MULTI-MONITOR SYSTEM  1

Fig. 5

FIG. 5 SECOND EMBODIMENT

```
              ┌─────────────┐
              │    START    │
              └─────────────┘
                     │
                     ▼
         ┌───────────────────────┐
         │    SELECT MASTER      │ ～ S21
         │    DISPLAY DEVICE     │
         └───────────────────────┘
                     │
                     ▼
         ┌───────────────────────┐
         │  SET COLOR TEMPERATURE│ ～ S22
         │   AND GAMMA VALUE     │
         └───────────────────────┘
                     │
                     ▼
         ┌───────────────────────┐
         │ OBTAIN INFORMATION FROM│ ～ S23
         │   EACH DISPLAY DEVICE  │
         └───────────────────────┘
                     │
                     ▼
         ┌───────────────────────────┐
         │ DETERMINE LUMINANCE INFORMATION│ ～ S24
         │  VALUE OF EACH DISPLAY DEVICE  │
         └───────────────────────────┘
                     │
                     ▼
         ┌───────────────────────┐
         │  SET SET LUMINANCE VALUE OF│ ～ S25
         │    MASTER DISPLAY DEVICE   │
         └───────────────────────┘
                     │
                     ▼
         ┌───────────────────────────┐
         │ CALCULATE SET LUMINANCE VALUES OF│ ～ S26
         │    SLAVE DISPLAY DEVICES        │
         └───────────────────────────┘
                     │
                     ▼
 ┌─────────────────────────────────────────────────┐
 │ TRANSMIT SET LUMINANCE VALUES, COLOR TEMPERATURE, AND│ ～ S27
 │   GAMMA VALUE TO EACH DISPLAY DEVICE            │
 └─────────────────────────────────────────────────┘
                     │
                     ▼
              ┌─────────────┐
              │     END     │
              └─────────────┘
```

EP 3 010 009 A1

Fig. 6

FIG. 6   THIRD EMBODIMENT

MULTI-MONITOR SYSTEM  1

IMAGE SIGNAL

CONTROLLER  7

FIRST DISPLAY DEVICE  3a

9
LIQUID CRYSTAL PANEL

LIQUID CRYSTAL PANEL IMAGE SIGNAL

IMAGE PROCESSING CIRCUIT  11

STORAGE  19

29
DISPLAY SCREEN

25
PROCESSING/ OPERATING UNIT

IMAGE PROCESSING CIRCUIT CONTROL SIGNAL

21

TYPE IDENTIFIER

ACTUALLY MEASURED RGB LUMINANCE VALUE

STORAGE

13   VISIBLE LIGHT

BACKLIGHT

BACKLIGHT DRIVE VOTAGE /CURRENT

15
BACKLIGHT CONTROL CIRCUIT

BACKLIGHT CONTROL SIGNAL

PROCESSOR

TRANSMITTING/RECEIVING UNIT

RGB GAIN VALUE

SET LUMINANCE VALUE

TRANSMITTING/RECEIVING UNIT

27

23

17

23a

IMAGE SIGNAL

SECOND DISPLAY DEVICE  3b

9
LIQUID CRYSTAL PANEL

LIQUID CRYSTAL PANEL IMAGE SIGNAL

IMAGE PROCESSING CIRCUIT  11

STORAGE  19

TYPE IDENTIFIER

ACTUALLY MEASURED RGB LUMINANCE VALUE

IMAGE PROCESSING CIRCUIT CONTROL SIGNAL

21

23b

13   VISIBLE LIGHT

BACKLIGHT

BACKLIGHT DRIVE VOTAGE /CURRENT

15
BACKLIGHT CONTROL CIRCUIT

BACKLIGHT CONTROL SIGNAL

PROCESSOR

TRANSMITTING/RECEIVING UNIT

RGB GAIN VALUE

SET LUMINANCE VALUE

TRANSMITTING/RECEIVING UNIT

17

EP 3 010 009 A1

23

Fig. 7

FIG. 7  THIRD EMBODIMENT

Fig. 8

FIG. 8   FOURTH EMBODIMENT

MULTI-MONITOR SYSTEM  1

IMAGE SIGNAL

FIRST DISPLAY DEVICE ⟋ 3a

| 9 | LIQUID CRYSTAL PANEL IMAGE SIGNAL | | STOR AGE ⟋19 | ADJUST MENT SWITCH | 33 | | 3 |
| LIQUID CRYSTAL PANEL | | IMAGE PROCESSING CIRCUIT ⟋11 | | | | |

IMAGE PROCESSING CIRCUIT CONTROL SIGNAL

21

VISIBLE LIGHT

13

BACKLIGHT DRIVE VOLTAGE /CURRENT

15

BACKLIGHT CONTROL SIGNAL

TRANSMIT TING/REC EIVING UNIT

BACKLIGHT

BACKLIGHT CONTROL CIRCUIT

PROCESSING/ OPERATING UNIT

31

IMAGE SIGNAL

SECOND DISPLAY DEVICE ⟋ 3b

| 9 | LIQUID CRYSTAL PANEL IMAGE SIGNAL | | STOR AGE ⟋19 | ADJUST MENT SWITCH | 33 |
| LIQUID CRYSTAL PANEL | | IMAGE PROCESSING CIRCUIT ⟋11 | | | |

IMAGE PROCESSING CIRCUIT CONTROL SIGNAL

21

VISIBLE LIGHT

13

BACKLIGHT DRIVE VOLTAGE /CURRENT

15

BACKLIGHT CONTROL SIGNAL

TRANSMIT TING/REC EIVING UNIT

BACKLIGHT

BACKLIGHT CONTROL CIRCUIT

PROCESSING/ OPERATING UNIT

31

FIG. 9  FOURTH EMBODIMENT

```
          START
            │
            ▼
┌──────────────────────────┐
│ SET COLOR TEMPERATURE AND │  S41
│       GAMMA VALUE         │
└──────────────────────────┘
            │
            ▼
┌──────────────────────────┐
│  OBTAIN INFORMATION FROM  │  S42
│     EACH DISPLAY DEVICE   │
└──────────────────────────┘
            │
            ▼
┌──────────────────────────────┐
│ DETERMINE LUMINANCE INFORMATION│  S43
│   VALUE OF EACH DISPLAY DEVICE │
└──────────────────────────────┘
            │
            ▼
┌──────────────────────────┐
│  SET SET LUMINANCE VALUE OF│  S44
│     MASTER DISPLAY DEVICE  │
└──────────────────────────┘
            │
            ▼
┌──────────────────────────┐
│ CALCULATE SET LUMINANCE VALUES OF│  S45
│      SLAVE DISPLAY DEVICES │
└──────────────────────────┘
            │
            ▼
┌────────────────────────────────────────────┐
│ TRANSMIT SET LUMINANCE VALUES, COLOR TEMPERATURE,│  S46
│ AND GAMMA VALUE TO DISPLAY DEVICES OTHER THAN    │
│   DISPLAY DEVICE INCLUDING ITSELF               │
└────────────────────────────────────────────┘
            │
            ▼
┌────────────────────────────────────────────┐
│ GENERATE IMAGE PROCESSING CIRCUIT CONTROL SIGNAL│  S47
│ AND BACKLIGHT CONTROL SIGNAL FOR DISPLAY DEVICE │
│         INCLUDING ITSELF                        │
└────────────────────────────────────────────┘
            │
            ▼
           END
```

Fig. 9

Fig. 10

FIG. 10  FIFTH EMBODIMENT  EXAMPLE CONFIGURATION 1

Fig. 11

FIG. 11    FIFTH EMBODIMENT    EXAMPLE CONFIGURATION 2

MULTI-MONITOR SYSTEM   1

CLOUD SERVER    37

FIRST DISPLAY DEVICE    3a

FIRST CONTROLLER    7a

29  DISPLAY SCREEN

25  PROCESSING/ OPERATING UNIT

STOR AGE    27

29  DISPLAY SCREEN

25  PROCESSING/ OPERATING UNIT

STOR AGE    27

21

TYPE IDENTIFIER

ACTUALLY MEASURED LUMINANCE VALUE

ARBITRARILY SET SET LUMINANCE VALUE

TYPE IDENTIFIER

ACTUALLY MEASURED LUMINANCE VALUE

TRANSMIT TING/REC EIVING UNIT

ARBITRARILY SET SET LUMINANCE VALUE

TRANSMIT TING/REC EIVING UNIT    23

TRANSMIT TING/REC EIVING UNIT    35

TRANSMIT TING/REC EIVING UNIT    39a

SECOND DISPLAY DEVICE    3b

SECOND CONTROLLER    7b

29  DISPLAY SCREEN

25  PROCESSING/ OPERATING UNIT

STOR AGE    27

39

21

TYPE IDENTIFIER

ACTUALLY MEASURED LUMINANCE VALUE

TYPE IDENTIFIER

ACTUALLY MEASURED LUMINANCE VALUE

39b

TRANSMIT TING/REC EIVING UNIT

CALCULATED SET LUMINANCE VALUE

TRANSMIT TING/REC EIVING UNIT    23

TRANSMIT TING/REC EIVING UNIT    35

CALCULATED SET LUMINANCE VALUE

TRANSMIT TING/REC EIVING UNIT

EP 3 010 009 A1

28

Fig. 12

FIG. 12   FIFTH EMBODIMENT   EXAMPLE CONFIGURATION 3

MULTI-MONITOR SYSTEM  1

FIRST DISPLAY DEVICE  3a

FIRST CONTROLLER  7a

CLOUD SERVER  37

3

29 DISPLAY SCREEN

25 PROCESSING/ OPERATING UNIT

STOR AGE  27

29 DISPLAY SCREEN

25 PROCESSING/ OPERATING UNIT

STOR AGE  27

21 TRANSMITTING/RECEIVING UNIT

TYPE IDENTIFIER
ACTUALLY MEASURED LUMINANCE VALUE

ARBITRARILY SET SET LUMINANCE VALUE

23 TRANSMITTING/RECEIVING UNIT

35 TRANSMITTING/RECEIVING UNIT

ARBITRARILY SET SET LUMINANCE VALUE
TYPE IDENTIFIER
ACTUALLY MEASURED LUMINANCE VALUE

39a TRANSMITTING/RECEIVING UNIT

39

SECOND DISPLAY DEVICE 3b

SECOND CONTROLLER  7b

29 DISPLAY SCREEN

25 PROCESSING/ OPERATING UNIT

STOR AGE  27

21 TRANSMITTING/RECEIVING UNIT

TYPE IDENTIFIER
ACTUALLY MEASURED LUMINANCE VALUE

CALCULATED SET LUMINANCE VALUE

2b TRANSMITTING/RECEIVING UNIT

35 TRANSMITTING/RECEIVING UNIT

ARBITRARILY SET SET LUMINANCE VALUE
TYPE IDENTIFIER
ACTUALLY MEASURED LUMINANCE VALUE
REPRESENTATIVE LUMINANCE VALUE

39b TRANSMITTING/RECEIVING UNIT

Fig. 13

FIG. 13   FIFTH EMBODIMENT   EXAMPLE CONFIGURATION 4

Fig. 14

FIG. 14 FIFTH EMBODIMENT EXAMPLE CONFIGURATION 5

MULTI-MONITOR SYSTEM 1

CLOUD SERVER 37

DISPLAY SCREEN 29
PROCESSING/ OPERATING UNIT 25
STORAGE 27
TRANSMITTING/RECEIVING UNIT 39a
TRANSMITTING/RECEIVING UNIT 39b
39

TYPE IDENTIFIER
ACTUALLY MEASURED LUMINANCE VALUE
ARBITRARILY SET SET LUMINANCE VALUE
TYPE IDENTIFIER
ACTUALLY MEASURED LUMINANCE VALUE
CALCULATED SET LUMINANCE VALUE

FIRST CONTROLLER 7a
STORAGE 27
DISPLAY SCREEN 29
PROCESSING/ OPERATING UNIT 25
TRANSMITTING/RECEIVING UNIT 35
TRANSMITTING/RECEIVING UNIT 23

SECOND CONTROLLER 7b
STORAGE 27
DISPLAY SCREEN 29
PROCESSING/ OPERATING UNIT 25
TRANSMITTING/RECEIVING UNIT 35
TRANSMITTING/RECEIVING UNIT 23

3

TYPE IDENTIFIER
ACTUALLY MEASURED LUMINANCE VALUE
ARBITRARILY SET SET LUMINANCE VALUE
TYPE IDENTIFIER
ACTUALLY MEASURED LUMINANCE VALUE
CALCULATED SET LUMINANCE VALUE

FIRST DISPLAY DEVICE 3a
TRANSMITTING/RECEIVING UNIT 21

SECOND DISPLAY DEVICE 3b
TRANSMITTING/RECEIVING UNIT 21

## INTERNATIONAL SEARCH REPORT

| International application No. |
|---|
| PCT/JP2014/064347 |

| A. CLASSIFICATION OF SUBJECT MATTER |
|---|
| G09G5/00(2006.01)i, G09G3/20(2006.01)i, G09G3/36(2006.01)i, G09G5/02 (2006.01)i, H04N5/66(2006.01)i |

According to International Patent Classification (IPC) or to both national classification and IPC

| B. FIELDS SEARCHED |
|---|
| Minimum documentation searched (classification system followed by classification symbols) G09G3/00-5/42, H04N5/66 |

| Documentation searched other than minimum documentation to the extent that such documents are included in the fields searched |
|---|
| Jitsuyo Shinan Koho          1922–1996   Jitsuyo Shinan Toroku Koho   1996–2014 Kokai Jitsuyo Shinan Koho    1971–2014   Toroku Jitsuyo Shinan Koho   1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2012-98559 A (Canon Inc.), 24 May 2012 (24.05.2012), paragraphs [0034] to [0065]; fig. 6 to 12 (Family: none) | 1-3,9,11, 13-15,21, 24-26,32<br>8,12,20,23, 31 |
| X<br><br>Y | JP 2005-141043 A (Fujitsu Ltd.), 02 June 2005 (02.06.2005), paragraphs [0064] to [0070]; fig. 9 (Family: none) | 1-3,9,11, 13-15,21, 24-26,32<br>8,12,20,23, 31 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 30 July, 2014 (30.07.14) | Date of mailing of the international search report 12 August, 2014 (12.08.14) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/064347

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | WO 2010/122633 A1 (NEC Display Solutions, Ltd.),<br>28 October 2010 (28.10.2010),<br>paragraphs [0013] to [0031]; fig. 1 to 2<br>(Family: none) | 1-3,7,9,11, 13-15,19,21, 24-26,30,32<br>4-6,8,10,12, 16-18,20, 22-23,27-29, 31,33 |
| X<br><br>Y | JP 2001-324971 A (NEC Corp.),<br>22 November 2001 (22.11.2001),<br>paragraphs [0015] to [0026]<br>(Family: none) | 1-3,7,9,11, 13-15,19,21, 24-26,30,32<br>4-6,8,10,12, 16-18,20, 22-23,27-29, 31,33 |
| Y | JP 2012-156719 A (Funai Electric Co., Ltd.),<br>16 August 2012 (16.08.2012),<br>paragraphs [0034] to [0065]; fig. 1 to 3<br>& US 2012/0188265 A1 | 4-6,8,10,12, 16-18,20, 22-23,27-29, 31,33 |
| Y | JP 2013-7862 A (Sharp Corp.),<br>10 January 2013 (10.01.2013),<br>paragraph [0046]<br>(Family: none) | 8,12,20,23, 31 |
| Y | JP 2013-106347 A (Sharp Corp.),<br>30 May 2013 (30.05.2013),<br>paragraphs [0193] to [0194]<br>& US 2013/0120589 A1 | 12,23 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012172637 A